(19) Europäisches Patentamt
European Patent Office
Office européen des brevets

(11) **EP 4 661 094 A1**

(12) **EUROPEAN PATENT APPLICATION**
published in accordance with Art. 153(4) EPC

(43) Date of publication:
**10.12.2025 Bulletin 2025/50**

(21) Application number: **24749895.9**

(22) Date of filing: **11.01.2024**

(51) International Patent Classification (IPC):
**H01M 4/134** (2010.01)     **H01M 4/36** (2006.01)
**H01M 4/38** (2006.01)

(52) Cooperative Patent Classification (CPC):
**H01M 4/134; H01M 4/36; H01M 4/38;** Y02E 60/10

(86) International application number:
**PCT/JP2024/000511**

(87) International publication number:
**WO 2024/161940 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2023 JP 2023013025**

(71) Applicant: **Panasonic Energy Co., Ltd.
Osaka 570-8511 (JP)**

(72) Inventor: **OKAZAKI, Keita
Kadoma-shi, Osaka 571-0057 (JP)**

(74) Representative: **Novagraaf International SA
Chemin de l'Echo 3
1213 Onex, Geneva (CH)**

(54) **NON-AQUEOUS ELECTROLYTE SECONDARY BATTERY**

(57)     A nonaqueous electrolyte secondary battery includes a positive electrode, a negative electrode, and a nonaqueous electrolyte. The negative electrode has a negative electrode current collector, and a negative electrode mixture layer formed on a surface thereof. The negative electrode mixture layer contains a negative electrode active material including at least a Si-containing material. The negative electrode mixture layer has a first region and a second region, the first region being nearer to the negative electrode current collector than the second region. An inter-particle porosity S1 in the first region and an inter-particle porosity S2 in the second region satisfy S1 ≤ 7%, and S2 > S1. The Si-containing material has a carbon phase and silicon phases dispersed therein, and an intra-particle porosity of the Si-containing material is 6% or more and 20% or less.

FIG. 1

## Description

[Cross Reference to Related Application]

The present disclosure claims priority with respect to the Japanese Patent Application No. 2023-013025 filed on January 31, 2023, and the entire content of the patent application is incorporated herein by reference into the present specification.

[Technical Field]

The present disclosure relates to a nonaqueous electrolyte secondary battery.

[Background Art]

Patent Literature 1 proposes "a negative electrode for a secondary battery, comprising a negative electrode mixture layer having a negative electrode active material, the negative electrode active material containing graphite particles and a Si-containing material, wherein the Si-containing material includes a Si-containing material A having a carbon phase and silicon particles dispersed in the carbon phase, and when the negative electrode composite layer is divided into two equal parts in the thickness direction, an average value of an intra-particle porosity of the graphite particles contained in an upper half region is 13% or less, and is smaller than an average value of an intra-particle porosity of the graphite particles contained in a lower half region."

[Citation List]

[Patent Literature]

Patent Literature 1: International Publication WO2022/070818

[Summary of Invention]

[Technical Problem]

The proposal in Patent Literature 1 aims to "improve the charge-discharge cycle characteristics of a secondary battery, by using a negative electrode active material containing a Si-containing material."

However, in the low-density region of the negative electrode mixture layer, in which the contact area between materials is small, poor connection between particles and electrical isolation of particles that occur due to expansion and contraction of the Si-containing material associated with charging and discharging tend to proceed.

On the other hand, in the high-density region of the negative electrode mixture layer, the amount of nonaqueous electrolyte or lithium ions that can be held within that region is small, and the supply of lithium ions to the Si-containing material, which requires a large amount of lithium ions, tends to be stagnant.

As described above, there is a room for improvement in the proposal in Patent Literature 1, in terms of improving the cycle characteristics of nonaqueous electrolyte secondary batteries.

[Solution to Problem]

One aspect of the present disclosure relates to a nonaqueous electrolyte secondary battery, including: a positive electrode, a negative electrode, and a nonaqueous electrolyte, wherein the negative electrode has a negative electrode current collector, and a negative electrode mixture layer formed on a surface of the negative electrode current collector, the negative electrode mixture layer contains a negative electrode active material including at least a Si-containing material, the Si-containing material includes a first composite material having a carbon phase and silicon phases dispersed in the carbon phase, an intra-particle porosity of the first composite material is 6% or more and 20% or less, the negative electrode mixture layer has a first region and a second region, the first region being nearer to the negative electrode current collector than the second region, and an inter-particle porosity S1 in the first region and an inter-particle porosity S2 in the second region satisfy $S1 \leq 7\%$, and $S2 > S1$.

[Advantageous Effects of Invention]

According to the present disclosure, it is possible to provide a nonaqueous electrolyte secondary battery having excellent cycle characteristics.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic longitudinal sectional view of an example of the structure of a negative electrode.
[FIG. 2] A schematic longitudinal sectional view of the structure of a negative electrode mixture layer in a discharged state.
[FIG. 3] A schematic longitudinal sectional view of the structure of a negative electrode mixture layer in a charged state.
[FIG. 4] A schematic longitudinal sectional view of an example of the structure of a particle of a Si-C material.
[FIG. 5] A schematic longitudinal sectional view of an example of the structure of a nonaqueous electrolyte secondary battery.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit.

Nonaqueous electrolyte secondary batteries includes at least lithium-ion secondary batteries. Nonaqueous electrolyte secondary batteries may be liquid secondary batteries containing an electrolyte solution as an electrolyte, and may be solid-state batteries or all-solid-state batteries containing a gel electrolyte or a solid electrolyte.

A nonaqueous electrolyte secondary battery includes a positive electrode, a negative electrode, and a nonaqueous electrolyte. A separator may be disposed between the positive electrode and the negative electrode.

The negative electrode has a negative electrode current collector, and a negative electrode mixture layer formed (or supported) on a surface of the negative electrode current collector. The negative electrode mixture layer may be in the form of film.

The negative electrode mixture layer is constituted of a negative electrode mixture. The negative electrode mixture contains a negative electrode active material as an essential component. Therefore, the negative electrode mixture layer may be called a negative electrode active material layer. The negative electrode active material reversibly absorbs and releases lithium ions.

The negative electrode mixture may contain, as optional components, a binder, a conductive agent, and a thickener. The negative electrode mixture layer is supported on the surface of one or both sides of the negative electrode current collector.

The negative electrode mixture layer is formed by, for example, applying a negative electrode slurry of a negative electrode mixture dispersed in a dispersion medium onto a surface of the negative electrode current collector, followed by drying. The applied film after drying may be rolled.

The negative electrode active material according to the present disclosure includes at least a first composite material, as a Si-containing material. The Si-containing material includes a silicon phase. The silicon phase is capable of forming an alloy with lithium, and reversibly absorbs and releases lithium ions. The first composite material includes a carbon phase (C) and silicon phases (Si) dispersed in the carbon phase. The first composite material is hereinafter sometimes referred to as a "Si-C material."

The silicon phase is a material that can exhibit remarkably high capacity, and the carbon phase can also reversibly absorb and release lithium ions. Furthermore, the carbon phase can relax the stress caused in association with expansion and contraction of the silicon phase. Thus, the Si-C material is excellent in both aspects of achieving high capacity and improving cycle characteristics.

However, there is a room for further improvement in cycle characteristics. Specifically, when the negative electrode mixture layer has a first region (hereinafter sometimes referred to as a "lower layer region") and a second region (hereinafter sometimes referred to as an "upper layer region"), and the first region is nearer to the negative electrode current collector than the second region, there is a tendency that the supply of lithium ions to the lower layer region becomes stagnant. On the other hand, in the upper layer region, there is a tendency that the Si-C material becomes electrically isolated due to expansion and contraction of the silicon phases.

In Patent Literature 1, the "intra-particle porosity" of the graphite particles contained in the negative electrode mixture layer is varied between the upper layer region and the lower layer region. This intends to improve the cycle characteristics by forming a density difference between the upper layer and the lower layer, with the upper layer region more unlikely to collapse, and thus improving the liquid absorption performance of the upper layer region. However, when a density difference is formed between the upper layer and the lower layer, the isolation of the Si-containing material in the upper layer region and the stagnation of the supply of lithium ions in the lower layer region are accelerated. Therefore, improving the cycle characteristics by controlling the "intra-particle porosity" of the graphite particles is naturally limited.

In the present disclosure, when the negative electrode mixture layer is configured to have a multilayer structure, an inter-particle porosity S1 in the first region (lower layer region) on the negative electrode current collector side of the negative electrode mixture layer and an inter-particle porosity S2 in the second region (upper layer region) on the positive electrode or separator side of the negative electrode mixture layer are controlled to satisfy

Condition 1: $S1 \leq 7\%$
and

Condition 2: $S2 > S1$.

When Condition 1 ($S1 \leq 7\%$) is not satisfied, that is, when the inter-particle porosity in the lower layer region exceeds 7%, the current-collecting ability of the negative electrode deteriorates, so that it is difficult to improve the cycle characteristics. It is also difficult to obtain a high-capacity negative electrode.

When Condition 2 is not satisfied, and $S2 \leq S1$, there is a strong tendency that the supply of lithium ions to the first region (lower layer region) becomes stagnant, and it is difficult to improve the cycle characteristics. This is because when the second region is relatively dense, the supply of lithium ions to the second region becomes stagnant, and the supply of lithium ions to the first region becomes more stagnant. In that case, even if the intra-particle porosity (Sin) of the first composite material (Si-C material) is sufficiently ensured, it is difficult to supply a sufficient amount of lithium ions to the high-capacity Si-containing material. Moreover, when the first region is relatively sparse, it becomes difficult to maintain the strength of the negative electrode mixture layer over a long time. On the other hand, when Conditions 1 and 2 are satisfied, lithium ions are supplied only to the lower layer region in which the inter-particle porosity is small, through a route with high resistance, leading to improved cycle characteristics.

A typical negative electrode mixture layer that satisfies Conditions 1 and 2 has a two-layer structure. The thickness of each layer, however, is not limited. Also, as long as satisfying Conditions 1 and 2, the negative electrode mixture layer may have a one-layer structure, and may have a two-layer, or a three- or more-layer structure. When the negative electrode mixture layer has a two-layer structure, the thickness of each layer is desirably 30% to 70% (0.3T to 0.7T), or 40% to 60% (0.4T to 0.6T) of a thickness T of the negative electrode mixture layer. When the negative electrode mixture layer has a three-layer structure, the thickness of each layer is desirably 15% to 50% (0.15T to 0.5T), or 20% to 40% (0.2T to 0.4T) of the thickness T of the negative electrode mixture layer. In addition, when the negative electrode mixture layer has three or more layers, any two of the layers may satisfy Conditions 1 and 2.

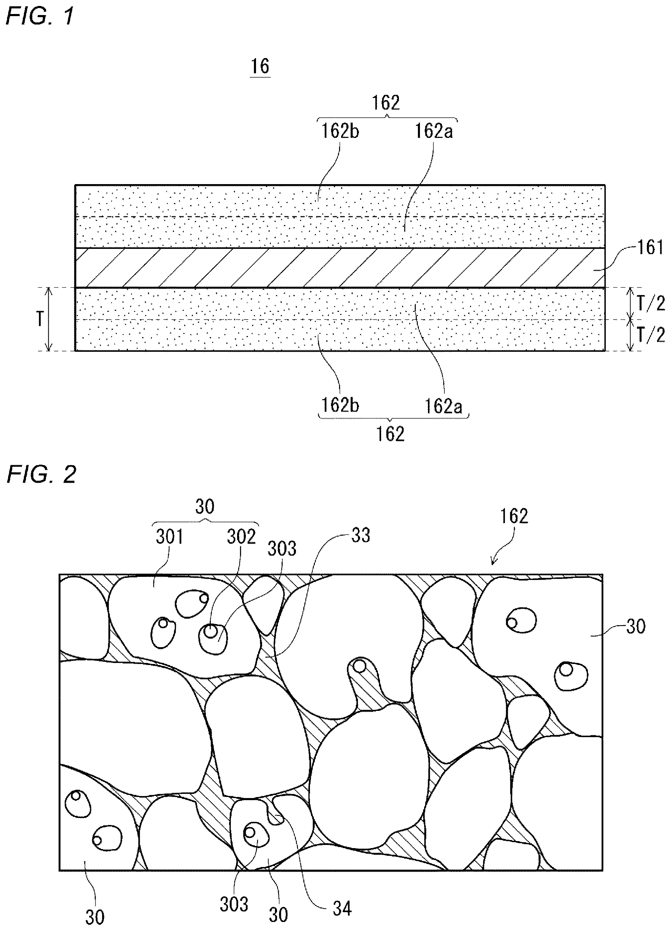

FIG. 1 is a longitudinal sectional view illustrating, as an example, a negative electrode in which the negative electrode mixture layer has two layers consisting of a first region (lower layer region) 162a and a second region (upper layer region) 162b having the same thickness. The negative electrode 16 has a sheet-form of a negative electrode current collector 161, and a negative electrode mixture layer 162 having a thickness T formed on both surfaces of the negative electrode current collector 161. The negative electrode mixture layer 162 contains a negative electrode active material, and the negative electrode active material contains a first composite material (Si-C material) as an essential component.

The negative electrode mixture layer 162 has two layers consisting of the first region (lower layer region) 162a and the second region (upper layer region) 162b. In this example, the first region 162a and the second region 162b both have a thickness of T/2. Without limited to this example, for example, the ratio of the thicknesses between the first region 162a and the second region 162b may be 10:90 to 90:10. The first region 162a is a region nearer to the negative electrode current collector 161 than the second region 162b. The second region 162b is a region which is half the negative electrode mixture layer 162, on the opposite side to the negative electrode current collector 161 (on the positive electrode or separator side).

The inter-particle porosity S1 in the first region 162a is 7% or less (Condition 1: $S1 \leq 7\%$) and is smaller than the inter-particle porosity S2 in the second region 162b (Condition 2: $S2 > S1$). That is, in the first region 162a, the negative electrode mixture is more densely packed than in the second region 162b. In FIG. 1, the negative electrode mixture layer 162 is formed on both surfaces of the negative electrode current collector 161, but the negative electrode mixture layer may be formed only on one surface of the negative electrode current collector.

In the present disclosure, not only the above conditions are satisfied, but also an intra-particle porosity Sin of the first composite material (Si-C material) is controlled to be 6% or more and 20% or less. In other words, one of the features of the present disclosure is to use a porosified Si-C material, as the Si-containing material.

When the intra-particle porosity Sin of the first composite material (Si-C material) is less than 6%, at least in the first region, the space capable of holding the nonaqueous electrolyte (i.e., lithium ions) becomes deficient, and the supply of lithium ions to the Si-C material, which requires a large amount of lithium ions during charging, tends to be stagnant. It is therefore difficult to provide a nonaqueous electrolyte secondary battery having excellent cycle characteristics.

On the other hand, when the intra-particle porosity Sin of the first composite material (Si-C material) exceeds 20%, it becomes difficult to ensure high capacity, and the current-collecting ability deteriorates. Moreover, the particle strength of the first composite material (Si-C material) itself decreases. It is therefore difficult to provide a nonaqueous electrolyte secondary battery having excellent cycle characteristics.

To achieve more favorable cycle characteristics, it is desirable to control the intra-particle porosity Sin of the first composite material (Si-C material) to 8% or more and 12% or less.

The content ratio of the silicon phases in the Si-C material is, for example, 30 mass% or more and 80 mass% or less, may be 35 mass% or more and 75 mass% or less, and may be 55 mass% or more and 70 mass% or less.

A preferred average particle diameter of the silicon phases is, for example, 500 nm or less, may be 200 nm or less, and may be 100 nm or less. The average particle diameter of the silicon phases is, for example, 50 nm or more and 500 nm or less, and may be 100 nm or more and 400 nm or less.

The average particle diameter of the silicon phases is measured by observing the cross section of a particle of the Si-C material with a scanning electron microscope (SEM). Specifically, the average particle diameter of the silicon phases is determined as an average value of the maximum diameters of 100 silicon phases.

In the porosified Si-C material, even when the silicon phases repeatedly expand and contract severely in the upper layer region, intra-particle voids of the material itself can absorb the stress caused in association with the expansion. Furthermore, when the silicon phases contract, the originally present intra-particle voids are re-produced, so that the contact points between the particles in the negative electrode mixture layer are likely to be maintained. In other words, the particle of the porosified Si-C material can repeatedly expand and contract, with no significant changes in its apparent size.

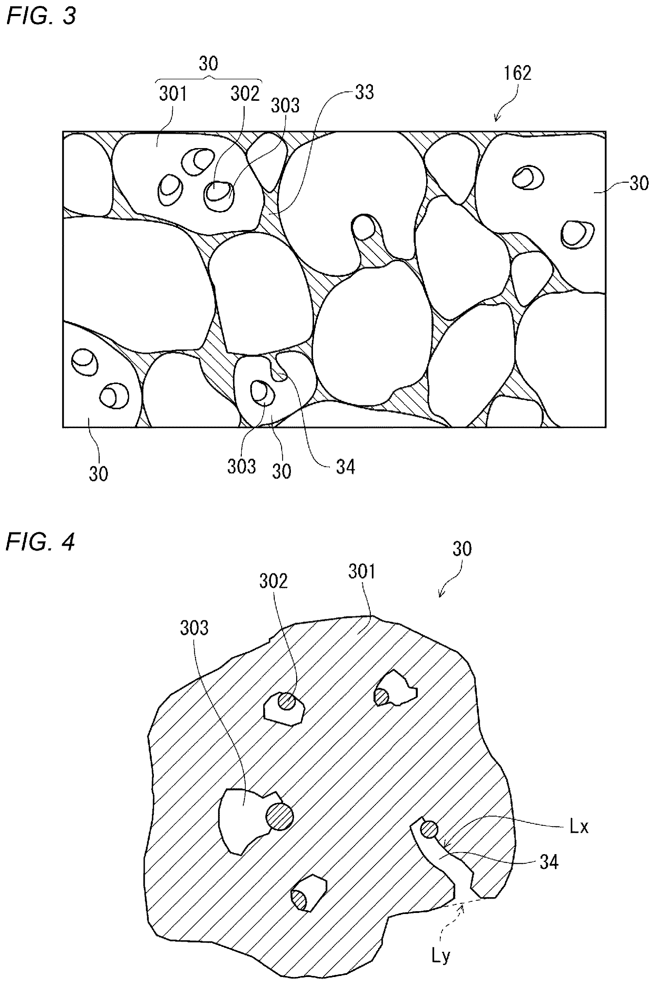

FIGS. 2 and 3 are schematic longitudinal sectional views, the former illustrating the structure of the negative electrode mixture layer 162 in a discharged state, and the latter illustrating the structure of the negative electrode mixture layer 162 in a charged state. Particles of the Si-C material (hereinafter, "Si-C particles") 30 are porous and each constituted of a carbon phase 301 and silicon phases 302. The silicon phases 302 are dispersed within the carbon phase 301. Intra-particle voids 303 are present in the vicinity of the silicon phases 302. Between the Si-C particle 30 and other particles, inter-particle voids 33 are formed. Some of the inter-particle voids 33 are external voids 34 each communicating with the inter-particle void 33 while surrounded by the inner wall of the Si-C particle 30.

In FIGS. 2 and 3, particles other than the particles denoted as the Si-C particles 30 are not particularly limited, and may be the Si-C particles 30, particles of a carbon material, such as graphite particles, and may be particles of a Si-containing material other than the SiC material (e.g., a first composite material or a second composite material as described later).

In a discharged state, the volume of the silicon phases (here, shown in a particulate state, and sometimes referred to as "silicon particles") is small, and many intra-particle voids 303 are present. On the other hand, in a charged state, the silicon particles expand, and the volume of the silicon phases increases. However, since the intra-particle voids 303 hold sufficient space, the expansion of the Si-C particle 30 itself is suppressed. In other words, even when the silicon phases 302 repeatedly expand and contract severely in the upper layer region 162b of the negative electrode mixture layer 162, the Si-C particle 30 can absorb the stress caused in association with the expansion, with its own intra-particle voids 303. Furthermore, when the silicon phases 302 contract, the volume of the originally present intra-particle voids 303 is restored, and the contact points between the particles in the negative electrode mixture layer can be maintained.

Furthermore, even when the lower layer region 162a of the negative electrode mixture layer 162 is densely packed, the Si-C particle 30 can hold a considerable amount of nonaqueous electrolyte (i.e., lithium ions) in its own intra-particle voids 303. Therefore, the Si-C particle can be supplied with lithium ions from the nonaqueous electrolyte which is held in both the intra-particle voids 303 of itself and the inter-particle voids 33. Therefore, the supply of lithium ions to the Si-C particles 30 which require a large amount of lithium ions during charging is unlikely to be stagnant.

As described above, according to the above configuration, beneficial conditions for improving the cycle characteristics can be satisfied in both the upper and lower layer regions, which makes it possible to achieve excellent cycle characteristics.

Here, definitions are described. The intra-particle porosity of a negative electrode material (graphite etc.) other than the Si-C material, the inter-particle porosity S1, and the inter-particle porosity S2 are all measured in cross sections of the first region and the second region observed in a cross section in the thickness direction of the negative electrode mixture layer. The intra-particle porosity of the Si-C material is measured by a nitrogen adsorption method.

(i) The intra-particle voids of a negative electrode active material other than the SiC material refer to closed spaces contained within a contour of the outer shape of a cross section of a particle of the negative electrode active material (graphite etc.) (hereinafter sometimes referred to as the "particle cross-section contour"). In other words, in the cross section of a particle of the negative electrode active material, in addition to the closed voids (i.e., intra-particle voids 303), a void (i.e., external void 34) communicating with the inter-particle void 33 can be present. Note that, in the nitrogen adsorption method, with no distinction between internal voids and external voids, both counted as the intra-particle voids.

(ii) The external void refers to, given that an opening communicating with the inter-particle void is closed by a straight line, a recessed portion surrounded by the particle cross-section contour of 1.5 times or more longer than the length (opening width) of the straight line that closes the opening.

FIG. 4 is a schematic longitudinal sectional view illustrating an example of the structure of a particle of the Si-C material 30. The Si-C particle 30 has a typical intra-particle void 303 and an external void 34. The intra-particle void 303 is a closed space surrounded by the inner wall of the Si-C particle 30. The external void 34 communicates with the inter-particle void 33 while surrounded by the inner wall of the Si-C particle 30. A length Lx of a part of the particle cross-section contour surrounding the external void 34 (specifically, the contour of the inner wall of the recess of the Si-C particle 30) is 1.5 times or more the length (opening width) of a virtual straight line (dashed line Ly) that closes the opening that allows communication between the external void 34 and the inter-particle void 33.

(iii) The intra-particle porosity Sin refers to a ratio of the area of intra-particle voids contained within a contour of the outer shape of a cross section of the particle of the negative electrode active material to the area surrounded by the contour.

(iv) The inter-particle voids refer to the remaining voids after excluding the intra-particle voids from all the voids observed in the cross section of the first region (lower layer region) or the cross section of the second region (upper layer region).

Note that, in principle, the external void is included in the inter-particle voids. However, as described later, when it is unclear whether the void is an external void or an intra-particle void, such a void is treated as the intra-particle void.

(v) The inter-particle porosity S1 refers to a ratio of an area SP1 of the inter-particle voids in the first region to an area SA1 of the cross section of the first region (lower layer region) (S1 (%) = (SP1/SA1) × 100).

(v) The inter-particle porosity S2 refers to a ratio of an area SP2 of the inter-particle voids in the second region to an area SA2 of the cross section of the second region (upper layer region) (S2 (%) = (SP2/SA2) × 100).

<Procedure for measuring intra-particle porosity of material other than Si-C>

(1) A battery in a discharged state (DOD = 0 to 10%) after the initial cycle (e.g., a battery subjected to several times to less than ten times of charging and discharging) is disassembled, and a part of the negative electrode is cut out, from which a cross section of the negative electrode mixture layer (first region or second region) is exposed. As the method for exposing a cross section, for example, a part of the negative electrode is cut out, which may be processed with an ion-milling machine (e.g., IM4000PLUS, available from Hitachi High-Tech Corporation), to expose a cross section of the negative electrode mixture layer.

(2) A backscattered electron image of the exposed cross section of the negative electrode mixture layer is photographed using a scanning electron microscope (SEM). The magnification when photographing a backscattered electron image may be, for example, 3,000 to 5,000 times.

(3) The obtained backscattered electron image is captured into a computer, and binarized using an image analysis software (e.g., "ImageJ" developed at the National Institutes of Health, USA), to obtain a binarized image in which the cross sections of the particles in the electron image are shown in black, and the voids present in the cross sections of the particles are shown in white. The binarized image is photographed in a such size that 10 or more particles of the negative electrode active material as measurement targets are observed (e.g., a rectangle having a size of a predetermined thickness of the negative electrode mixture layer multiplied by a length (W) of 300 $\mu$m along the surface direction of the negative electrode mixture layer).

(4) From the binarized image, all the particles of the negative active material as measurement targets (graphite particles, etc.) are selected, the area surrounded by the contour of the outer shape of a cross section of each of the particles (particle cross-sectional area) is calculated. With the diameter of an equivalent circle having the same area as the particle cross-sectional area taken as the particle diameter of that particle, a volume-based particle size distribution is calculated, and a median diameter (D50) at 50% cumulative volume is calculated.

(5) At least 10 particles having a particle diameter as close as possible to the median diameter are selected. With respect to all the selected particles, a particle cross-sectional area and an area of the intra-particle voids are calculated, and a ratio of the area of the intra-particle voids to the particle cross-sectional area is calculated as an intra-particle porosity (%).

Note that, with respect to a void with an opening width of 3 $\mu$m or less of the voids, in image analyzing, it may be difficult to distinguish whether it is an intra-particle void or an external void (inter-particle void). Therefore, a void with an opening width of 3 $\mu$m or less may be regarded as the intra-particle void.

(6) An average value is calculated from the intra-particle porosities of all the selected particles.

<Procedure for measuring intra-particle porosity of Si-C material>

In a nitrogen adsorption method, 0.20 g to 0.25 g of particles of the Si-C material are sampled, and the particles are placed in a measurement cell constituted of a glass tube for specific surface area measurement, followed by drying and degassing of the measurement cell. The secondary battery is disassembled, to take out the negative electrode, which is washed with a solvent such as dimethyl carbonate, and dried. The negative electrode mixture layer is sampled from the negative electrode, and the Si-C material separated therefrom may be used as a sample. The drying and degassing is performed at a pressure of 6.67 Pa and a temperature of 250 °C + 5 *C* for 1 hour or more. Thereafter, the mass of the sample in the measurement cell is measured to the order of 0.1 mg. Then, the nitrogen adsorption amount of the sample under the temperature of -196 °C is measured using a specific surface area measuring instrument. The measuring instrument may be, for example, an automatic surface area and pore size distribution analyzer "TriStarII 3020" available from Shimadzu Corporation. From the measurement results of the adsorption amount, a cumulative pore volume in the range of 0.001 to 0.5 $\mu$m is calculated as the volume of the intra-particle voids by the BJH method.

<Procedure for measuring inter-particle porosity S1, S2>

(1) As in the case of measuring the intra-particle porosity, a battery in a discharged state after the initial cycle is disassembled, and a part of the negative electrode is cut out, from which a cross section of the first region or second region of the negative electrode mixture layer is exposed. In this case, too, the negative electrode mixture layer may be processed with an ion-milling machine (e.g., IM4000PLUS, available from Hitachi High-Tech Corporation), to expose a cross section of the negative electrode mixture layer.

(2) A backscattered electron image of the exposed cross section of the first or second region is photographed using a scanning electron microscope (SEM). The magnification when photographing a backscattered electron image may be, for example, 800 times.

(3) The obtained backscattered electron image is captured into a computer, and binarized using an image analysis software (e.g., "ImageJ" developed at the National Institutes of Health, USA), to obtain a binarized image in which the voids observed in the backscattered electron image are shown in white, and the regions other than the voids are shown in black. The length (W) along the plane direction of the negative electrode mixture layer in the binarized image may be 1000 $\mu$m to 3000 $\mu$m. The size of the binarized image may be a predetermined thickness of the negative electrode mixture layer multiplied by the W ($\mu$m$^2$).

(4) The area of the intra-particle voids is subtracted from the area of the voids shown in white, to calculate an area of the inter-particle voids. A ratio of the area of the inter-particle voids in the area of the binarized image is calculated as an inter-particle porosity (%).

(5) The S1 and the S2 are each calculated as an average value of three measurements performed as above.

Condition 1 should be S1 $\leq$ 7%, and from the viewpoint of high capacity, may be S1 $\leq$ 5%, and may be S1 $\leq$ 4.5%. Even in the case where the inter-particle porosity S1 in the first region (lower layer region) is small as above, when the intra-particle porosity of the Si-C material is 6% or more and 20% or less, the nonaqueous electrolyte (i.e., lithium ions) can be sufficiently held in the lower layer region. Therefore, the Si-C material, which requires a large amount of lithium ions during charging, can be supplied with lithium ions, without the supply becoming stagnant.

Condition 2 should be S2 > S1, and from the viewpoint of achieving both more excellent cycle life and high capacity, preferably satisfies 1.3 $\leq$ S2/S1 $\leq$ 5.5, and more preferably satisfies 3.5 $\leq$ S2/S1 $\leq$ 5.0. When the S2/S1 is 1.3 or more (even 3.5 or more), the supply of lithium ions to the lower layer region is facilitated. Furthermore, when the S2/S1 is 5.5 or less (even 5.0 or less), the isolation of the Si-C material particles in the upper layer region is suppressed, which is beneficial for improving the cycle characteristics.

From the viewpoint of more remarkably suppressing the isolation of the Si-C material and allowing the Si-C material to retain an abundant amount of nonaqueous electrolyte, the specific surface area of the Si-C material, for example, may be 5 m$^2$/g or more and 20 m$^2$/g or less, may be 7 m$^2$/g or more and 20 m$^2$/g or less, and may be 10 m$^2$/g or more and 20 m$^2$/g or less.

Likewise, from the viewpoint of remarkably suppressing the isolation of the Si-C material and allowing the Si-C material to retain an abundant amount of nonaqueous electrolyte, the average pore diameter of the Si-C material, for example, is 1 nm or more and 45 nm or less, and may be 10 nm or more and 20 nm or less. The average pore diameter is a median diameter in a volume-based pore diameter distribution of the Si-C material. The pore size distribution is a distribution in the range of 1 nm to 500 nm.

Here, in principle, the specific surface area and the average pore diameter of the SiC material are physical properties that are evaluated using the Si-C material isolated from the negative electrode mixture layer, as a sample. The particles of the Si-C material are robust, and the physical properties of the raw Si-C material before blended into the negative electrode mixture can be maintained almost intact. The specific surface area and the average pore diameter of the Si-C material reflect the intra-particle voids and the external voids of the Si-C material.

The specific surface area of the Si-C material is measured using a sample of 0.20 g to 0.25 g of the Si-C material, after placing the sample in a measurement cell constituted of a glass tube for specific surface area measurement, and drying and degassing the measurement cell. The drying and degassing is performed at a pressure of 6.67 Pa and a temperature of 250 °C + 5 °C for 1 hour or more. Thereafter, the mass of the sample in the measurement cell is measured to the order of 0.1 mg. Then, the nitrogen adsorption amount of the sample under the temperature of -196 °C is measured using a specific surface area measuring instrument. From the measurement results of the adsorption amount, the specific surface area of the Si-C material is determined by the BET multipoint method in the range of partial pressure (relative pressure) of 0.03 to 1.0.

Furthermore, from the volume-based pore size distribution of the Si-C material determined by the BET multipoint method, the median diameter at 50% cumulative volume is calculated as an average pore diameter.

The median diameter (average particle diameter) in the volume-based particle size distribution of the particles of the Si-C material may be, for example, 0.5 $\mu$m to 20 $\mu$m, and from the viewpoint of achieving more favorable cycle characteristics, desirably, 1.0 $\mu$m to 10 $\mu$m.

Here, in principle, the average particle diameter of the Si-C material is a median diameter in a volume-based particle size distribution, based on the particle cross-sectional area determined by the already-described method from the binarized image. The median diameter may be measured by a laser diffraction scattering method, using the Si-C material isolated from the negative electrode mixture layer, as a sample. The particles of the Si-C material are robust, and the physical properties of the raw Si-C material before blended into the negative electrode mixture can be maintained almost intact.

Next, an example of the method for producing a Si-C material will be described. The Si-C material can be obtained by, for example, mixing a carbon source and raw material silicon, stirring the mixture, while crushing, in a stirrer such as a ball mill, and then firing the mixture in an inert atmosphere. The carbon source that can be used includes, for example, pitch, tar, saccharides, water-soluble resins, and the like. In particular, pitch, carboxymethyl cellulose (CMC), polyvinylpyrrolidone, cellulose, sucrose, and the like are preferably used. When mixing a carbon source and raw material silicon, for example, the carbon source and the raw material silicon may be dispersed in a dispersion medium, such as alcohol. By adjusting the blending ratio of the carbon source and the raw material silicon and the particle size of the raw material silicon, the amount and the size of the silicon phases dispersed in the carbon phase can be controlled.

The carbon phase can be constituted of, for example, amorphous carbon. The amorphous carbon, for example, may be hard carbon, soft carbon, or otherwise.

Here, the Si-C material can be porosified by mixing a pore-forming material with a mixture of the carbon source and the raw material silicon, and removing the pore-forming material from a product obtained by firing the mixture. The pore-forming material is not particularly limited, and may be, for example, a powder that is dissolved easily with an acidic aqueous solution in which silicon phases hardly dissolve. An example of such a powder of the pore-forming material is an oxide of a transition metal (e.g., Cu, Fe, etc.). The median diameter in a volume-based particle size distribution of the pore-forming material may be selected as appropriate depending on the pore size distribution of a desired Si-C material.

It is desirable to perform the washing under the condition that allows most of the pore-forming material to disappear, while minimizing the influence on the carbon phase and the silicon phases. For example, as the acid used in the acidic aqueous solution, dilute sulfuric acid or the like can be used.

A specific example of the method for producing a Si-C material will be given below.

First, pitch serving as a carbon source, and coarse particles of raw material silicon are mixed in a predetermined ratio, to which iron oxide (FeO) is added in an amount of 5 to 30 parts by mass per 100 parts by mass of the mixture, followed by further mixing. The mixture is then fired at 600 to 1000 °C for 1 to 10 hours in an inert gas atmosphere (non-oxidizing atmosphere), such as nitrogen or argon. The resultant fired product, which is a massive material, is pulverized into a desired average particle diameter (median diameter), using a pulverizer like a ball mill. Then, the powder of the Si-C material is washed with an acidic aqueous solution which contains sulfuric acid as an acid, and dried. Thus, a Si-C powder suitable for use as a negative electrode active material can be obtained.

The negative electrode active material may contain a Si-containing material other than the first composite material (Si-C material), and may contain a material other than the Si-containing material. To fully obtain the benefit of the first composite material, it is desirable that 1 mass% or more, further 5 mass% or more, or 50 mass% or less of the negative electrode active material is the first composite material (Si-C material).

As the Si-containing material other than the first composite material (Si-C material), for example, at least one of a second composite material and a third composite material described below may be used.

The second composite material is a composite material having a $SiO_2$ phase and silicon phases dispersed in the $SiO_2$ phase. The $SiO_2$ phase may be, for example, an amorphous phase containing 95 mass% or more of silicon dioxide. The overall composition of the second composite material can be expressed by, for example, $SiO_x$ where $0.5 \leq x < 2$, preferably $0.8 \leq x \leq 1.6$.

The $SiO_x$ is synthesized by, for example, heat-treating silicon monoxide, to be separated into a $SiO_2$ phase and fine silicon phases through disproportionation reaction.

In the second composite material, too, the stress caused in association with the expansion and contraction of the silicon phases during charging and discharging is relaxed by the $SiO_2$ phase, which is beneficial for improving the cycle characteristics. On the other hand, the $SiO_2$ phase can absorb lithium ions during charging, to produce a $Li_4SiO_4$ phase. The irreversible capacity thereof is therefore somewhat large.

The third composite material is a composite material having a silicate phase and a silicon phases dispersed in the silicate phase. The silicate phase preferably contains at least one of an alkali metal element (a Group I element other than hydrogen in the long periodic table) and a Group II element in the long periodic table. The silicate phase may be a lithium silicate phase.

The composition of the lithium silicate phase can be expressed by a formula: $Li_{2y}SiO_{2+y}$ where $0 < y < 2$. Here, y may be 1/2, and may be 1.

The third composite material can be obtained by, for example, pulverizing a mixture of silicate and raw material silicon, while stirring, in a ball mill or the like, into fine particles, and then, heat-treating the mixture in an inert atmosphere.

The average particle diameter of the silicon phases dispersed in the silicate phase is, for example, 50 nm or more and 500 nm or less, and may be 100 nm or more and 400 nm or less. The average particle diameter of the silicon phases is determined as an average value of the maximum diameters of any 100 silicon phases observed in a cross-sectional SEM image of a particle of the third composite material.

The content ratio of the silicon phases in the third composite material, for example, may be 30 mass% or more and 95 mass% or less, and may be 35 mass% or more and 75 mass% or less.

The median diameters (average particle diameters) in a volume-based particle size distribution of the particles of the second composite material and the third composite material are, for example, 1 μm or more and 25 μm or less, preferably 4 μm or more and 15 μm or less. In the above range, favorable battery performance is likely to be obtained.

As a material other than the Si-containing material, a carbon material is preferred. The carbon material can be graphite, graphitizable carbon (soft carbon), non-graphitizable carbon (hard carbon), and the like. In particular, preferred is graphite, which is stable during charging and discharging and whose irreversible capacity is small.

Graphite refers to a carbon material having an interplanar spacing d002 of the (002) plane as measured by X-ray diffractometry of 0.340 nm or less. The crystallite size Lc(002) of the graphite particle measured by X-ray diffractometry, for example, may be 5 nm or more, may be 5 nm or more and 300 nm or less, and may be 10 nm or more and 200 nm or less.

The median diameter (average particle diameter) in a volume-based particle size distribution of the graphite particles is, for example, 1 μm or more and 30 μm or less.

Here, in principle, the average particle diameter of the graphite particles is a median diameter in the volume-based particle size distribution based on the particle cross-sectional area determined by the already-described method from the binarized image.

When graphite particles and a Si-containing material (or a Si-C material) are used in combination, the proportion of the Si-containing material (or the Si-C material) in the negative electrode active material (the total of the graphite particles and the Si-containing material (or the Si-C material)) is, for example, 1 mass% or more and 50 mass% or less, may be 3 mass% or more and 30 mass% or less, and may be 3 mass% or more and 15 mass% or less. In this case, improved cycle characteristics and high capacity can be achieved in a balanced matter.

The binder may be a resin material, examples of which include: fluorocarbon resins, such as polytetrafluoroethylene and polyvinylidene fluoride (PVDF); polyolefin resins, such as polyethylene and polypropylene; polyamide resins, such as aramid resin; polyimide resins, such as polyimide and polyamide imide; acrylic resins, such as polyacrylic acid, polymethyl acrylate, and ethylene-acrylic acid copolymer; vinyl resins, such as polyacrylonitrile and polyvinyl acetate; polyvinylpyrrolidone; polyethersulfone; and rubbery materials, such as styrene-butadiene copolymer rubber (SBR). The binder may be used singly or in combination of two or more kinds.

Examples of the conductive agent include: carbons, such as acetylene black; carbon fibers (carbon nanotubes (CNTs), carbon fibers other than CNTs); metal fibers; and metal powders, such as aluminum. The conductive agent may be used singly or in combination of two or more kinds.

Examples of the thickener include: cellulose derivatives (cellulose ether, etc.), such as carboxymethyl cellulose (CMC), modified products thereof (including salts such as Na salts), and methylcellulose; and saponified products of a polymer having a vinyl acetate unit, such as polyvinyl alcohol. The thickener may be used singly or in combination of two or more kinds.

The negative electrode current collector that can be used include a non-porous conductive substrate (metal foil, etc.) and a porous conductive substrate (mesh, net, punched sheet, etc.). Examples of the material of the negative electrode current collector include stainless steel, nickel, nickel alloy, copper, and copper alloy. The thickness of the negative electrode current collector is, although not particularly limited to, preferably 1 to 50 $\mu$m, more preferably 5 to 20 $\mu$m.

Examples of the thickener include: cellulose derivatives (cellulose ethers, etc.), such as carboxymethyl cellulose (CMC), modified products thereof (including salts such as Na salts), and methylcellulose; saponified products of a polymer having a vinyl acetate unit, such as polyvinyl alcohol; and polyethers (e.g., polyalkylene oxide, such as polyethylene oxide).

An example of the method for producing a negative electrode will be described below, with a case of forming a two-layered negative electrode mixture layer taken as an example.

A first negative electrode slurry in which a first negative electrode mixture is dispersed in a dispersion medium, and a second negative electrode slurry in which a second negative electrode mixture is dispersed in a dispersion medium are prepared. The first negative electrode mixture and the second negative electrode mixture each contain a Si-C material, graphite, and an optional component (e.g., at least one of a binder, a conductive agent, and a thickener).

As the dispersion medium, although not particularly limited to, for example, water, an alcohol such as ethanol, an ether such as tetrahydrofuran, an amide such as dimethylformamide, N-methyl-2-pyrrolidone (NMP), a mixture of them, and the like can be used.

Here, for the first graphite contained in the first negative electrode slurry, graphite with a large intra-particle porosity which is easily crushable by rolling is selected. On the other hand, for the second graphite contained in the second negative electrode slurry, graphite with a small intra-particle porosity which is not easily crushable by rolling is selected.

The first negative electrode slurry is applied onto a negative electrode current collector, to form a first applied film, followed by drying, and then, the second negative electrode slurry is applied onto the first applied film, to form a second applied film, followed by drying. When the laminate of the first applied film and the second applied film after drying is rolled, a two-layered negative electrode mixture layer constituted of a first layer of the first negative electrode mixture and a second layer of the second negative electrode mixture is obtained on the negative electrode current collector. By rolling, in the first layer, the first graphite is crushed and densely packed in the first layer. In the second layer, the second graphite, which is not easily crushable, is sparsely packed in the second layer. As a result, a negative electrode mixture layer that satisfies Condition 2 ($S2 > S1$) is obtained. Here, the intra-particle porosity of the first graphite particles, the rolling conditions, and the like are controlled so that Condition 1 ($S1 \leq 7\%$) can be satisfied.

The thicknesses of the first layer and the second layer may be the same or different. Each of the thicknesses of the first layer and the second layer may be 30% to 70%, or 40% to 60% of the total thickness of the first layer and the second layer.

Note that three or more kinds of negative electrode slurries with different compositions may be prepared, and applied in layers. In that case, the negative electrode slurries may be sequentially applied on the negative electrode current collector from the one containing a negative electrode mixture which is easily packed densely, to form a negative electrode mixture layer in which the inter-particle porosity increases gradually from the negative electrode current collector side.

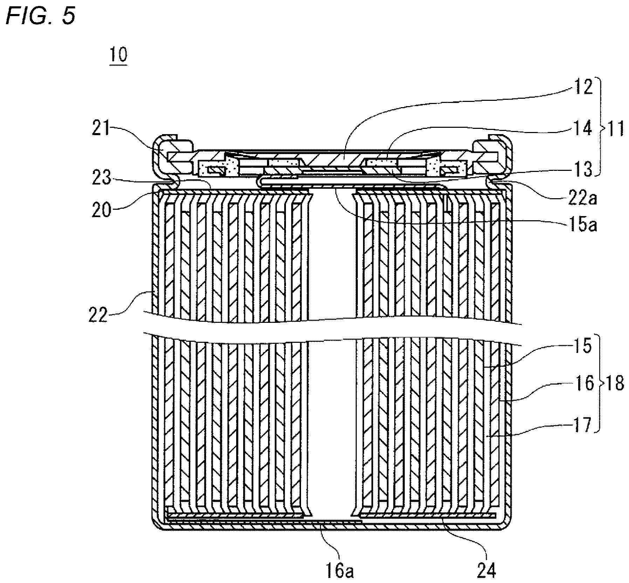

FIG. 5 is a longitudinal sectional view of a cylindrical nonaqueous electrolyte secondary battery (hereinafter, sometimes referred to as a "secondary battery 10"), which is an example of the present embodiment. The present disclosure, however, is not limited to the following configuration.

The secondary battery 10 includes an electrode group 18, a nonaqueous electrolyte (not shown), and a bottomed cylindrical battery can 22 housing them. A sealing assembly 11 is fixed by crimping at the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive electrode external terminal. A negative electrode lead 16a extended from the negative electrode plate 16 is connected to the bottom inner surface of the battery can 22. An annular groove 22a is formed near the open end of the battery can 22. A first insulating plate 23 is placed between one end face of the electrode group 18 and the annular groove 22a. A second insulating plate 24 is placed between the other end face of the electrode group 18 and the bottom of the battery can 22. The electrode group 18 is formed by winding the positive electrode plate 15 and the negative electrode plate 16, with the separator 17 interposed therebetween.

[Positive electrode]

The positive electrode includes, for example, a positive electrode current collector and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, followed by drying. The applied film after drying may be rolled, as necessary. The positive electrode mixture layer may be formed on one surface or both surfaces of a sheet-form of the positive electrode current collector. The positive electrode mixture contains a positive electrode active material as an essential component, and may contain, as optional components, a binder, a conductive agent, and the like. As the dispersion medium of the positive electrode slurry, NMP or the like is used.

As the positive electrode active material, for example, a composite oxide containing lithium and a transition metal, such as Ni, Co, and Mn, can be used. Examples thereof include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMPO_4$, and $Li_2MPO_4F$, where M is at least one selected from the group consisting of Na, Mg, Sc, Y, Mn, Fe, Co, Ni, Cu, Zn, Al, Cr, Pb, Sb, and B. Here, $0 < a \leq 1.2$, $0 < b \leq 0.9$, and $2.0 \leq c2.3$. The value "a" representing the molar ratio of lithium increases and decreases during charging and discharging.

In particular, preferred is a lithium-nickel composite oxide represented by $Li_aNi_bMe_{1-b}O_2$, where M is at least one selected from the group consisting of Mn, Co, and Al, $0 < a \leq 1.2$, and $0.3 \leq b < 1$. From the viewpoint of achieving high capacity, more preferably, $0.85 \leq b < 1$ is satisfied. From the viewpoint of the stability of the crystal structure, more preferred is $Li_aNi_bCo_cAl_dO_2$ containing Co and Al as the element represented by M, where $0 < a \leq 1.2$, $0.85 \leq b < 1$, $0 < c < 0.15$, $0 < d \leq 0.1$, and $b+c+d = 1$.

The binder and the conductive agent may be like those exemplified for the negative electrode. As the conductive agent, graphite, such as natural graphite and artificial graphite, may be used.

The positive electrode current collector that can be used include a non-porous conductive substrate (metal foil, etc.) and a porous conductive substrate (mesh, net, punched sheet, etc.). Examples of the material of the positive electrode current collector include stainless steel, aluminum, aluminum alloy, and titanium. The thickness of the positive electrode current collector is, although not particularly limited to, preferably 1 to 50 μm, more preferably 5 to 20 μm.

[Nonaqueous electrolyte]

The nonaqueous electrolyte may be a liquid electrolyte (electrolyte solution), may be a gel electrolyte, and may be a solid electrolyte. The liquid electrolyte is, for example, an electrolyte solution containing a nonaqueous solvent and a salt dissolved in the nonaqueous solvent. The concentration of the salt in the electrolyte solution is, for example, 0.5 mol/L or more and 2 mol/L or less. The electrolyte solution may contain a known additive.

The gel electrolyte contains a salt and a matrix polymer, or contains a salt, a nonaqueous solvent, and a matrix polymer. As the matrix polymer, for example, a polymer material that absorbs a nonaqueous solvent and turns into a gel is used. Examples of the polymer material include fluorocarbon resins, acrylic resins, polyether resins, and polyethylene oxide.

As the solid electrolyte, for example, a known material for use in all-solid lithium-ion secondary batteries and the like (e.g., oxide-based solid electrolyte, sulfide-based solid electrolyte, halide-based solid electrolyte) is used.

The liquid nonaqueous electrolyte is prepared by, for example, dissolving a salt in a nonaqueous solvent. The salt is an electrolyte salt that ionically dissociates in the electrolyte, and can include, for example, a lithium salt. The electrolyte may contain various additives. The electrolyte is usually used as it is in a liquid state, but may be in a state in which the fluidity is restricted by a gelling agent or the like.

As the nonaqueous solvent, for example, a cyclic carbonic acid ester, a chain carbonic acid ester, a cyclic carboxylic acid ester, a chain carboxylic acid ester, and the like are used. Examples of the cyclic carbonic acid ester include propylene carbonate (PC), and ethylene carbonate (EC). A cyclic carbonic acid ester having an unsaturated bond, such as vinylene carbonate (VC), may be used. A cyclic carbonic acid ester having a fluorine atom, such as fluoroethylene carbonate (FEC), may be used. Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. The nonaqueous solvent may be used singly or in combination of two or more kinds.

Examples of the lithium salt include $LiClO_4$, $LiBF_4$, $LiPF_6$, $LiAlCl_4$, $LiSbF_6$, $LiSCN$, $LiCF_3SO_3$, $LiCF_3CO_2$, $LiAsF_6$, $LiB_{10}Cl_{10}$, lower aliphatic lithium carboxylate, LiCl, LiBr, LiI, borates, and imide salts. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imide salts include lithium bisfluorosulfonylimide ($LiN(FSO_2)_2$), lithium bistrifluoromethanesulfonyl imide ($LiN(CF_3SO_2)_2$), lithium trifluoromethanesulfonyl nonafluorobutanesulfonyl imide ($LiN(CF_3SO_2)(C_4F_9SO_2)$), and lithium bispentafluoroethanesulfonyl imide ($LiN(C_2F_5SO_2)_2$). The lithium salt may be used singly or in combination of two or more kinds. The concentration of the lithium salt in the nonaqueous electrolyte solution is, for example, 0.5 mol/L or more and 2 mol/L or less.

[Separator]

It is desirable to interpose a separator between the positive electrode and the negative electrode. The separator is excellent in ion permeability and has moderate mechanical strength and electrically insulating properties. As the separator, for example, a microporous thin film, a woven fabric, a nonwoven fabric, and the like can be used. The material of the separator is preferably a polyolefin, such as polypropylene and polyethylene.

In an exemplary structure of the nonaqueous electrolyte secondary battery, an electrode group formed by winding the positive electrode and the negative electrode with the separator interposed therebetween is housed together with a nonaqueous electrolyte in an outer body. The wound electrode group may be replaced with a different form of electrode group, such as a stacked electrode group formed by stacking the positive electrode and the negative electrode with the separator interposed therebetween. The nonaqueous electrolyte secondary battery may be of any type, such as a cylindrical, prismatic, coin, button, or laminate type.

<<Supplementary notes>>

The above description of embodiments discloses the following techniques.

(Technique 1)

A nonaqueous electrolyte secondary battery, comprising:

a positive electrode, a negative electrode, and a nonaqueous electrolyte, wherein
the negative electrode has a negative electrode current collector, and a negative electrode mixture layer formed on a surface of the negative electrode current collector,
the negative electrode mixture layer contains a negative electrode active material including at least a Si-containing material,
the Si-containing material includes a first composite material having a carbon phase and silicon phases dispersed in the carbon phase,
an intra-particle porosity of the first composite material is 6% or more and 20% or less,
the negative electrode mixture layer has a first region and a second region, the first region being nearer to the negative electrode current collector than the second region, and
an inter-particle porosity S1 in the first region and an inter-particle porosity S2 in the second region satisfy
$S1 \leq 7\%$, and
$S2 > S1$.

(Technique 2)

The nonaqueous electrolyte secondary battery according to technique 1, wherein the inter-particle porosities S1 and S2 satisfy $3.5 \leq S2/S1 \leq 5.0$.

(Technique 3)

The nonaqueous electrolyte secondary battery according to technique 1 or 2, wherein a specific surface area of the first composite material is 5 $m^2/g$ or more and 20 $m^2/g$ or less.

(Technique 4)

The nonaqueous electrolyte secondary battery of any one of techniques 1 to 3, wherein an average pore diameter of the first composite material is 1 nm or more and 45 nm or less.

The present invention will be specifically described below with reference to Examples and Comparative Examples. It is to be noted, however, that the present invention is not limited to the following Examples.

<Example 1>

[Production of negative electrode]

(SiC material)

A Si-C material having physical properties as shown in Table 1 and having an intra-particle porosity as shown in Table 1 (11.2%) was synthesized. Specifically, pitch, coarse particles of raw material silicon, and fine particles of iron oxide (FeO) were mixed in a predetermined ratio, and the mixture was fired at 800 °C for 5 hours in an inert gas atmosphere. The fired product was pulverized into a desired average particle diameter (median diameter) in a ball mill, and then washed with an acidic aqueous solution and dried, to obtain a Si-C powder.

The median diameters of the Si-C materials in the present Example and the below-described Examples were each controlled so that the value measured by a laser diffraction scattering method using a particle size distribution analyzer "MT3300EXII" available from Microtrac Co., Ltd. was within the range of 0.02 $\mu$m to 2000 $\mu$m. It is estimated that the median diameters obtained from the binarized image by the already-described method will be within almost the same range as above.

The content ratio of the silicon phases in the Si-C material was set to 60 mass%.

The intra-particle porosity, the specific surface area, and the median diameter (D50) in a volume-based pore size distribution of the Si-C material measured by the already-described method using an automatic surface area and pore size distribution analyzer "Tristar II 3020" available from Shimadzu Corporation are shown in Table 1. It is estimated that the specific surface area and the median diameter in a pore size distribution of the Si-C material recovered from disassembled batteries after production will also be almost the same values as those obtained above.

(Carbon material)

Graphite particles A with a large intra-particle porosity which are easily crushable, and graphite particles B with a small intra-particle porosity which are not easily crushable were prepared. The average particle diameter measured by a laser diffraction scattering method using a particle size distribution analyzer "MT3300EXII" available from Microtrac Co., Ltd. was 18 $\mu$m for the graphite particles A, and 19 $\mu$m for the graphite particles B.

[Preparation of first negative electrode slurry]

A first negative electrode slurry was obtained by adding an appropriate amount of water to a first negative electrode mixture. The first negative electrode mixture contains, as a negative electrode active material, 10 parts by mass of the Si-C material, and 90 parts by mass of the graphite particles A (total 100 parts by mass). To 100 parts by mass of such a negative electrode active material, 1 part by mass of styrene-butadiene copolymer rubber (SBR) serving as a binder, and 1 part by mass of carboxymethyl cellulose (CMC) serving as a thickener were mixed, and the resultant mixture was used as the first negative electrode mixture.

[Preparation of second negative electrode slurry]

A second negative electrode slurry was obtained by adding an appropriate amount of water to a second negative electrode mixture. The second negative electrode mixture contains, as a negative electrode active material, 10 parts by mass of the Si-C material, and 90 parts by mass of the graphite particles B (total 100 parts by mass). To 100 parts by mass of such a negative electrode active material, 1 part by mass of styrene-butadiene copolymer rubber (SBR) serving as a binder, and 1 part by mass of carboxymethyl cellulose (CMC) serving as a thickener were mixed, and the resultant mixture was used as the second negative electrode mixture.

[Formation of negative electrode mixture layer]

The first negative electrode slurry was applied onto each of both surfaces of a copper foil (thickness 10 $\mu$m) serving as a negative electrode current collector, to form a first applied film, which was then dried. Subsequently, the second negative electrode slurry was applied onto each of the second applied films formed on both surfaces of the copper foil, to form a first applied film, which was then dried. The applied amounts of the first negative electrode slurry and the second negative electrode slurry were set in a mass ratio of 7:3.

The laminates of the first applied film and the second applied film after drying were rolled, to form a first negative electrode mixture layer (thickness 70 $\mu$m, inter-particle porosity 4%) and a second negative electrode mixture layer (thickness 30 $\mu$m, inter-particle porosity 15.6%) were formed in this order on each of both surfaces of the negative electrode current collector. In this way, a negative electrode was obtained.

Condition 1 was satisfied because S1 = 4% < 7%, Condition 2 (S2 > S1) was satisfied because S2/S1 = 3.9, and $3.5 \leq S2/S1 \leq 5.0$ was also satisfied.

[Production of positive electrode]

A positive electrode slurry was obtained by adding an appropriate amount of N-methyl-2-pyrrolidone (NMP) to a positive electrode mixture. The positive electrode mixture used here was a mixture of a lithium-containing composite oxide serving as a positive electrode active material, graphite serving as a conductive agent, and polyvinylidene fluoride (PVDF) serving as a binder. The lithium-containing composite oxide used here was $LiNi_{0.80}Co_{0.10}Mn_{0.10}O_2$. In the positive electrode mixture, the mass ratio of the lithium-containing composite oxide, the graphite, and the PVDF was 100:1:0.9.
The positive electrode slurry was applied onto each of both surfaces of an aluminum foil (thickness 15 $\mu$m) serving as a positive electrode current collector, and the applied film was dried and rolled, to form a positive electrode active material layer (density 3.6 g/cm$^3$). A positive electrode was thus obtained.

[Preparation of nonaqueous electrolyte]

To a nonaqueous solvent which was a 1:3 (volume ratio) mixture of ethylene carbonate (EC) and dimethyl carbonate (DMC), vinylene carbonate (VC) was added, to which $LiPF_6$ was then dissolved, to prepare a nonaqueous electrolyte. The VC content with respect to the whole nonaqueous electrolyte was set to 5 mass%. The concentration of $LiPF_6$ in the nonaqueous electrolyte was set to 1.5 mol/L.

[Fabrication of secondary battery]

In an inert gas atmosphere, the positive electrode and the negative electrode were spirally wound, with a separator (microporous membrane made of polyethylene) interposed therebetween, to prepare an electrode group. The electrode group was placed in a bag-shaped outer body made of a laminate sheet having an Al layer, and the nonaqueous electrolyte was injected thereinto. The outer body was then sealed, to complete a lithium-ion secondary battery A1.

<Example 2>

A lithium-ion secondary battery A2 in which S2/S1 = 4.0 was completed in the same manner as in Example 1, except that, in the production of negative electrode, a Si-C material having physical properties as shown in Table 1 and having an intra-particle porosity of 8.3% was used.

<Example 3>

A lithium-ion secondary battery A3 in which S1 = 7% and S2/S1 = 1.4 was completed in the same manner as in Example 1, except that, in the production of negative electrode, the applied amounts of the first negative electrode slurry and the second negative electrode slurry were set in a mass ratio of 5:5, and the rolling conditions were changed.

<Example 4>

A lithium-ion secondary battery A4 in which S2/S1 = 3.9 was completed in the same manner as in Example 1, except that, in the production of negative electrode, a Si-C material having physical properties as shown in Table 1 and having an intra-particle porosity of 11.0% was used.

<Comparative Example 1>

A lithium-ion secondary battery B1 was completed in the same manner as in Example 1, except that, in the production of negative electrode, a Si-C material having physical properties as shown in Table 1 and having an intra-particle porosity of 3.7% was used, the same graphite particles B were used, the first and second negative electrode mixture layers were set to have the same composition and formed simultaneously, so that S1 = 9%, and S2/S1 = 1.0.

<Comparative Example 2>

A lithium-ion secondary battery B2 was completed in the same manner as in Example 1, except that, in the production of negative electrode, a Si-C material having physical properties as shown in Table 1 and having an intra-particle porosity of 3.7% was used, so that S2/S1 = 4.2.

<Comparative Example 3>

A lithium-ion secondary battery B3 was completed in the same manner as in Example 3, except that, in the production of negative electrode, a Si-C material having physical properties as shown in Table 1 and having an intra-particle porosity of 3.7% was used.

<Comparative Example 4>

A lithium-ion secondary battery B4 was completed in the same manner as in Comparative Example 1, except that, in the production of negative electrode, a Si-C material having physical properties as shown in Table 1 and having an intra-particle porosity of 11.2% was used.

<Comparative Example 5>

A lithium-ion secondary battery B5 in which S1 = 12% and S2/S1 = 1.4 was completed in the same manner as in Example 3, except that, in the production of negative electrode, the rolling conditions were changed.

[Evaluation]

(Volumetric capacity density)

An evaluation cell was formed using the negative electrode obtained above, a Li electrode as a counter electrode, and the above nonaqueous electrolyte. A constant-current charging was performed at a current of 0.01C until the voltage reached 5 mV (vs. $Li/Li^+$). Then, a constant-current discharging was performed at a current of 0.1C until the voltage reached 1.0 V (vs. $Li/Li^+$). The discharge capacity of the negative electrode at this time was calculated as an initial capacity. A mixture density was determined from the weight and thickness of the negative electrode before the production of electrode plate. A volumetric capacity density was calculated by multiplying the initial capacity by the mixture density. Table 1 shows relative values, with the capacity density of Comparative Example 1 taken as 100%.

(Cycle characteristics)

In a 25 °C environment, a constant-current charging was performed at a current of 0.7C until the voltage reached 4.2 V, and then, a constant-voltage charging was performed at a voltage of 4.2 V until the current reached 0.02C. After a rest for 10 minutes, a constant-current discharging was performed at a current of 0.5C until the voltage reached 2.5 V. With this charge-discharge cycle counted as one cycle, 300 cycles of charging and discharging were performed, to calculate a cycle retention rate (%) from the following equation. Table 1 shows relative values, with the retention rate of Comparative Example 1 taken as 100%.

Cycle retention rate = (discharge capacity at 300th cycle / discharge capacity at 1st cycle) $\times$ 100

[Table 1]

|  | negative electrode mixture layer | | SiC material | | | evaluation | |
|---|---|---|---|---|---|---|---|
|  | S1 (%) | S2/S1 | Sin (%) | BET specific surface area (m²/g) | average pore diameter D50 (nm) | volumetric capacity density (%) | cycle retention rate (%) |
| A1 | 4 | 3.9 | 11.2 | 13 | 15 | 100 | 137 |
| A2 | 4 | 4.0 | 8.3 | 8 | 15 | 100 | 131 |
| A3 | 7 | 1.4 | 11.2 | 13 | 15 | 100 | 123 |
| A4 | 4 | 3.9 | 11.0 | 11 | 40 | 100 | 129 |
| B1 | 9 | 1.0 | 3.7 | 2 | 2 | 100 | 100 |
| B2 | 4 | 4.2 | 3.7 | 2 | 2 | 100 | 120 |
| B3 | 7 | 1.4 | 3.7 | 2 | 2 | 100 | 112 |

(continued)

| | negative electrode mixture layer | | SiC material | | | evaluation | |
|---|---|---|---|---|---|---|---|
| | S1 (%) | S2/S1 | Sin (%) | BET specific surface area ($m^2/g$) | average pore diameter D50 (nm) | volumetric capacity density (%) | cycle retention rate (%) |
| B4 | 9 | 1.0 | 11.2 | 13 | 15 | 100 | 108 |
| B5 | 12 | 1.4 | 11.2 | 13 | 15 | 88 | 122 |

Table 1 shows that a nonaqueous electrolyte secondary battery with excellent cycle characteristics was obtained when Conditions 1 and 2 were satisfied, and the intra-particle porosity of the Si-C material was 6% or more and 20% or less.

[Industrial Applicability]

The nonaqueous electrolyte secondary battery according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: secondary battery, 11: sealing body, 12: valve body, 13: metal plate, 14: insulating member, 15: positive electrode, 15a: positive electrode lead, 16: negative electrode, 16a: negative electrode lead, 17: separator, 18: electrode group, 21: gasket, 22: battery can, 22a: groove, 23: first insulating plate, 24: second insulating plate
30: Si-C particle, 301: carbon phase, 302: silicon phase, 303: intra-particle void, 33: inter-particle void, 34: external void
161: negative electrode current collector, 162: negative electrode mixture layer, 162a: first region (lower layer region), 162b: second region (upper layer region)

**Claims**

1.  A nonaqueous electrolyte secondary battery, comprising:

    a positive electrode, a negative electrode, and a nonaqueous electrolyte, wherein
    the negative electrode has a negative electrode current collector, and a negative electrode mixture layer formed on a surface of the negative electrode current collector,
    the negative electrode mixture layer contains a negative electrode active material including at least a Si-containing material,
    the Si-containing material includes a first composite material having a carbon phase and silicon phases dispersed in the carbon phase,
    an intra-particle porosity of the first composite material is 6% or more and 20% or less,
    the negative electrode mixture layer has a first region and a second region, the first region being nearer to the negative electrode current collector than the second region, and
    an inter-particle porosity S1 in the first region and an inter-particle porosity S2 in the second region satisfy $S1 \leq 7\%$, and
    $S2 > S1$.

2.  The nonaqueous electrolyte secondary battery according to claim 1, wherein the inter-particle porosities S1 and S2 satisfy $3.5 \leq S2/S1 \leq 5.0$.

3. The nonaqueous electrolyte secondary battery according to claim 1, wherein aspecific surface area of the first composite material is 5 m$^2$/g or more and 20 m$^2$/g or less.

4. The nonaqueous electrolyte secondary battery of any one of claims 1 to 3, wherein an average pore diameter of the first composite material is 1 nm or more and 45 nm or less.

FIG. 1

FIG. 2

*FIG. 3*

*FIG. 4*

FIG. 5

## INTERNATIONAL SEARCH REPORT

| International application No. |
| --- |
| **PCT/JP2024/000511** |

**A. CLASSIFICATION OF SUBJECT MATTER**

*H01M 4/134*(2010.01)i; *H01M 4/36*(2006.01)i; *H01M 4/38*(2006.01)i
FI:  H01M4/134; H01M4/36 A; H01M4/38 Z

According to International Patent Classification (IPC) or to both national classification and IPC

**B. FIELDS SEARCHED**

Minimum documentation searched (classification system followed by classification symbols)

H01M4/134; H01M4/36; H01M4/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022/070818 A1 (PANASONIC INTELLECTUAL PROPERTY MANAGEMENT CO., LTD.) 07 April 2022 (2022-04-07) | 1-4 |
| A | WO 2020/175361 A1 (SANYO ELECTRIC CO., LTD.) 03 September 2020 (2020-09-03) | 1-4 |
| A | WO 2016/035289 A1 (SANYO ELECTRIC CO., LTD.) 10 March 2016 (2016-03-10) | 1-4 |
| A | WO 2019/239652 A1 (SANYO ELECTRIC CO., LTD.) 19 December 2019 (2019-12-19) | 1-4 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **04 March 2024** | **12 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/000511**

| Patent document cited in search report | | | Publication date (day/month/year) | Patent family member(s) | | | Publication date (day/month/year) |
|---|---|---|---|---|---|---|---|
| WO | 2022/070818 | A1 | 07 April 2022 | EP | 4224561 | A1 | |
| | | | | CN | 116195087 | A | |
| WO | 2020/175361 | A1 | 03 September 2020 | US | 2022/0131131 | A1 | |
| | | | | EP | 3933972 | A1 | |
| | | | | CN | 113474914 | A | |
| WO | 2016/035289 | A1 | 10 March 2016 | US | 2017/0125806 | A1 | |
| | | | | CN | 106797020 | A | |
| WO | 2019/239652 | A1 | 19 December 2019 | US | 2021/0159489 | A1 | |
| | | | | EP | 3809492 | A1 | |
| | | | | CN | 112292773 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023013025 A

- WO 2022070818 A